# EUROPÄISCHE PATENTSCHRIFT

(11) **EP 0 747 103 B1**
(45) Veröffentlichungstag und Bekanntmachung des Hinweises auf die Patenterteilung: **19.08.1998**
(21) Anmeldenummer: 95810380.6
(22) Anmeldetag: 08.06.1995
(51) Int. Cl.: B01D 11/02, F16K 7/14, F16K 27/02

(54) **Extraktor für die Fest-Flüssig-Extraktion nach Soxhlet**
Soxhlet extractor for solid/liquid extraction
Extracteur soxhlet pour extraction solide/liquide

(43) Veröffentlichungstag der Anmeldung: 11.12.1996
(73) Patentinhaber: Büchi Labortechnik AG, CH-9230 Flawil (CH)
(72) Erfinder: Spring, Arthur, CH-9230 Flawil (CH); Hungerbühler, Stefan, CH-9230 Flawil (CH); Sanwald, Marco, CH-9035 Grub AR (CH); Bossart, Erwin, CH-9230 Flawil (CH)
(74) Vertreter: Wenger, René

(56) Entgegenhaltungen:
- EP-A- 0 444 007
- DE-B- 1 070 894
- FR-A- 2 257 054
- FR-A- 2 570 956
- GB-A- 843 094
- US-A- 5 017 500

## Beschreibung

Die Erfindung betrifft einen Extraktor für die Fest-Flüssig-Extraktion nach Soxhlet.

Bei bekannten Fest-Flüssig-Extraktoren nach Soxhlet wird ein Lösungsmittel in einem heizbaren Destillationsgefäss verdampft und über eine Dampfleitung in ein über dem Destillationsgefäss angeordnetes Extraktionsgefäss geführt. Das Extraktionsgefäss ist zur Aufnahme des zu extrahierenden Materials und des Extrakts vorgesehen und mit einem Kühler zur Kondensierung des Extraktions- oder Lösungsmittels ausgebildet.

Zum Rückführen des Extrakts vom Extraktionsgefäss in das Destillationsgefäss beim Erreichen eines bestimmten Niveaus des Extraktionsmittels im Extraktionsgefäss ist eine Rückflussleitung vorgesehen. Extraktoren nach Soxhlet gemäss der DIN 12602 verfügen über eine sogenannte Hebereinrichtung, die bei Erreichen des stets gleichen Lösungsmittelniveaus das Extrakt in das Destillationsgefäss zurückführt. Dabei ist jedoch eine Steuerung der Extraktrückführung nicht möglich. Voraussetzung zum Funktionieren eines solchen Extraktors ist also der Einsatz von stets der gleichen Menge von Lösungsmittel. Im Zuge eines immer grösser werdenden Umweltdenkens auch im Medizin- oder Laborbereich wäre es wünschbar, Extraktoren zu schaffen, bei denen die Menge des zu verwendenden Lösungsmittels durch den Benutzer individuell eingestellt werden könnte.

Die Erfindung stellt sich zur Aufgabe, einen Extraktor der eingangs genannten Art mit einer individuellen Steuerung der Extraktrückführung zu schaffen, bei der verschiedene Mengen von Lösungsmittel zur Destillation eingesetzt werden können. Dabei sollte die Extraktoranordnung auf einfache Weise zu reinigen sein und ein inertes System darstellen.

Diese Aufgabe wird erfindungsgemäss mit einem Extraktor gelöst, der die Merkmale im Anspruch 1 aufweist.

Am Extraktionsgefäss ist im Bodenbereich eine Rückflussleitung angebracht, die über ihre gesamte Länge mit Gefälle geführt ist und deren freies Ende in das Destillationsgefäss mündet.

Die Rückflussleitung kann mittels eines Ventils geöffnet oder geschlossen werden. Wenn das Lösungsmittelniveau die gewünschte Höhe erreicht hat, kann das Ventil geöffnet werden und das Extrakt fliesst in das Destillationsgefäss ab. Das Ventil ermöglicht eine Steuerung des Extraktionsvorgangs nach verschiedenen Parametern. Durch das Gefälle ist gewährleistet, dass jeweils das gesamte Extrakt abgeführt wird.

Das Schliesselement wird vorteilhaft über elektromagnetische Mittel aktiviert, welche am Gehäuse befestigt sind. Denkbar sind aber auch pneumatische, hydraulische oder mechanische Steuervorrichtungen und in bestimmten Fällen könnte das Schliesselement auch manuell betätigt werden.

In einer bevorzugten Ausführungsform sind das Extraktionsgefäss und die Rückflussleitung als einstückiger Glassatz ausgebildet und das Ventil weist Anschlussstutzen auf, mit welchen es direkt in die Rückflussleitung eingeschmolzen ist.

Eine solche Anordnung bietet sich vor allem zur Verwendung im labortechnischen Bereich an, wo Extraktoren periodisch gereinigt oder sterilisiert werden müssen.

Besonders vorteilhaft ist das Ventil mit wenigstens einer Ableitung und wenigstens einer Zuleitung versehen, die mit einer Ventilkammer in Verbindung stehen, in welcher wenigstens ein Ventilsitz angeordnet ist.

Das Ventil weist ein Schliesselement auf, das mit dem Ventilsitz dichtend zusammenwirkt und welches von der Aussenseite der Ventilkammer her aktivierbar ist.

Je nach Material für das Gehäuse bzw. für das Schliesselement wird damit das Ventil gegenüber dem durchströmenden Medium inert.

Besonders vorteilhaft ist die Verwendung eines Ventils, dessen Ventilkammer teilweise durch einen homogenen Ventilkörper aus Glas begrenzt wird, an dem ein Ventilsitz einstückig ausgebildet ist, der je einen Stutzen für die Zuleitung und für die Ableitung aufweist. Der Ventilkörper ist dabei lösbar in einem Gehäuse gehalten, das die übrige Ventilkammer umschliesst.

Wenn das Schliesselement eine Membrane aufweist, deren Randbereich fest und dichtend zwischen dem Ventilkörper und dem Gehäuse eingespannt ist, wird eine hermetische Trennung zwischen Zuleitung und Ableitung erreicht. Neben dem Ventilkörper aus Glas ist die Membrane das einzige Bauelement, das in der Ventilkammer dem durchströmenden Medium ausgesetzt ist. Die Membrane kann durchgehend aus einem elastischen Material bestehen, sie kann aber auch insbesondere im Randbereich relativ steif ausgebildet sein.

Eine besonderes vorteilhafte Bauweise ergibt sich, wenn der Ventilkörper etwa zylindrisch und das Gehäuse etwa topfförmig ausgebildet ist und seitliche Schlitze aufweist, durch welche die Stutzen aus dem Gehäuse austreten, wobei der Ventilkörper mit einer auf das Gehäuse aufsetzbaren Verschlusskappe fixierbar ist. Der Ventilkörper dient damit gleichzeitig als Halterung für das Gehäuse, an dem gegebenenfalls noch eine Steuervorrichtung befestigt ist. Bei der Verwendung einer Membrane kann dabei der Ventilsitz als kegelförmige Mündung an einer Stirnseite des Ventilkörpers ausgebildet sein. Die Membrane liegt dabei am Mündungskegel auf einer relativ kleinen Kreisringfläche auf, womit eine hohe Flächenpressung erzielt wird. Selbstverständlich könnte der Ventilsitz auch andere Formen aufweisen, insbesondere wenn als Schliesselement eine Kugel oder ein Kegel eingesetzt wird.

Wenn die kegelförmige Mündung von einer umlaufenden Nut umgeben ist, in welche eine Bohrung für die Ableitung mündet, wird verhindert, dass die Membrane auch noch an der Oeffnung für die Ableitung anliegen kann. Anderseits ist bei abgehobener Membrane der Strömungsquerschnitt stets ausreichend, so dass die Ventilkammer nicht als Drossel wirkt.

Besonders vorteilhaft ist die Verwendung von Mitteln, die am Extraktionsgefäss angeordnet sind und die zum Feststellen des Flüssigkeitsniveaus dienen. Sobald das Flüssigkeitsniveau einen bestimmten Pegel erreicht, senden die Mittel ein Signal aus, mit welchem das Ventil geöffnet werden kann. Nach einer vorbestimmten Zeit oder bei geleertem Extraktionsgefäss wird das Ventil wieder geschlossen.

In einer besonders optimalen Ausbildungsform ist ausserhalb des Extraktionsgefässes eine Steigleitung angeordnet, die mit dem Extraktionsgefäss kommuniziert. Dadurch wird in der Steigleitung eine Säule gebildet, die stets die gleiche Höhe aufweist, wie die Flüssigkeit im Extraktionsgefäss. Die Mittel zur Messung des Lösungsmittelniveaus können also auch an dieser Steigleitung angebracht sein. Zum Einstellen von verschiedenen Flüssigkeitsniveaus können die Mittel an der Steigleitung bewegbar angeordnet sein.

Als Mittel eignet sich insbesondere eine Lichtschrankenanordung. Dabei ist ein lichtaussendendes Senderelement auf der einen Seite der Steigleitung und ein Lichtempfängerelement gegenüber auf der anderen Seite der Steigleitung angeordnet. Sobald das Flüssigkeitsniveau in der Steigleitung die Höhe erreicht, an der die Lichtschrankenanordnung angebracht ist, ändert sich die Stärke des vom Empfängerelement detektierten Lichtes und die Lichtschrankenanordnung sendet ein Signal zum Oeffnen des Ventils aus. Als Mittel ist jedoch auch eine Schwimmeranordnung oder eine induktive Messung denkbar.

Eine besonders vorteilhafte Konstruktion des Extraktionsgefässes ergibt sich, wenn die Steigleitung an ihrem unteren Ende direkt und oberhalb des Ventils in die Rückflussleitung mündet. Eine solche Anordnung weist vorallem den Vorteil auf, dass für die Steigleitung und für die Rückflussleitung nur ein gemeinsamer Ausgang aus dem Extraktionsgefäss vorgesehen werden muss.

Zur Ausführung von Heiss-Extraktionen kann das Extraktionsgefäss zusätzlich über eine separate Heizeinrichtung verfügen.

In einer bevorzugten Ausführungsform ist am Extraktionsgefäss und/oder am Destillationsgefäss ein Temperatursensor angeordnet. Das Ventil ist über die ermittelte Temperatur ansteuerbar. Damit soll erreicht werden, dass das Ventil erst bei Erreichen einer bestimmten Temperatur des zu extrahierenden Materials geöffnet wird.

In einer bevorzugten Ausführungsform weist das Destillationsgefäss einen Inertgasanschluss auf. Durch Zugabe von Inertgas kann die Exhaktoranordnung auf einfache Weise ausgetrocknet werden, wobei wahlweise ein Absperren des Ventils möglich ist.

Ein Ausführungsbeispiel der Erfindung ist in den Zeichnungen dargestellt und wird nachfolgend genauer beschrieben. Es zeigen:
- Figur 1: einen erfindungsgemässen Extraktor nach Soxhlet mit einem in die Rückflussleitung integrierten Ventil,
- Figur 2: eine Draufsicht auf die Mittel am Steigrohr gemäss Figur 1.
- Figur 3: einen Querschnitt durch ein Hubankermagnetventil im geschlossenen Zustand,
- Figur 4: das Ventil gemäss Figur 3 in geöffnetem Zustand,
- Figur 5: einen Schnitt durch die Ebene I-I gemäss Figur 4,
- Figur 6: eine Draufsicht auf einen Ventilkörper, und
- Figur 7: einen Querschnitt durch den Ventilkörper gemäss Figur 6.

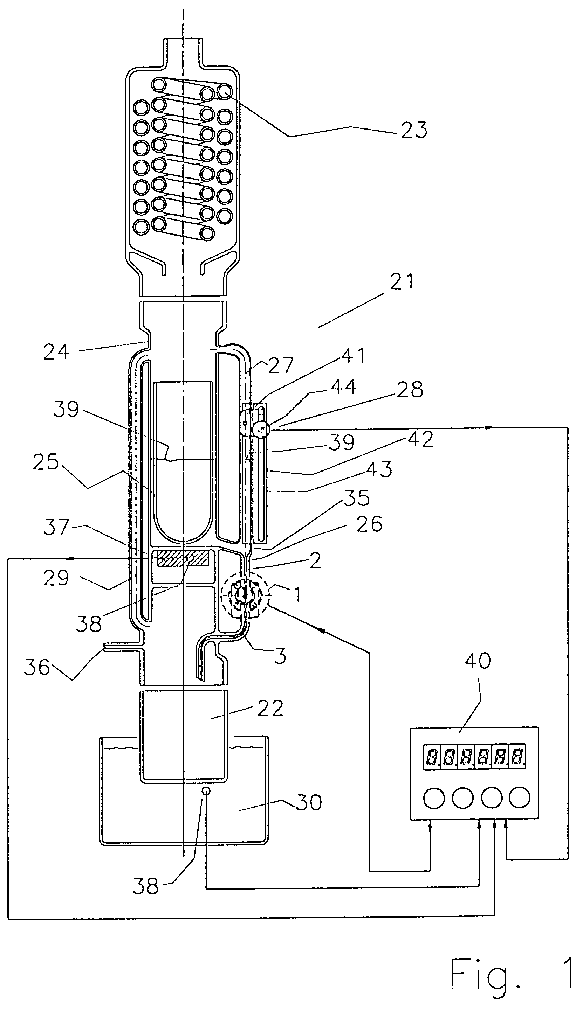

Figur 1 zeigt einen Extraktor 21 mit einer mit einem Ventil 1 versehenen Rückflussleitung 26. Der Extraktor 21 hat ein Destillationsgefäss 22, in dem mit Hilfe einer Heizeinrichtung 30 ein Extraktionsmittel zum Sieden erhitzt werden kann. Das Extraktionsmittel steigt als Dampf durch das Dampfrohr 29 auf, wird am Kühler 23 kondensiert und tropft in das Extraktionsgefäss 24. Der zu extrahierende Stoff ist in eine Extraktionshülse 25 mit einem durchlässigen Boden gefüllt. Vom unteren Ende des Extraktionsgefässes 24 führt eine Rückflussleitung 26 zurück zum Destillationsgefäss 22. Die Rückflussleitung 26 ist über ihre ganze Länge mit Gefälle geführt und mündet mit ihrem freien Ende im Destillationsgefäss 22.

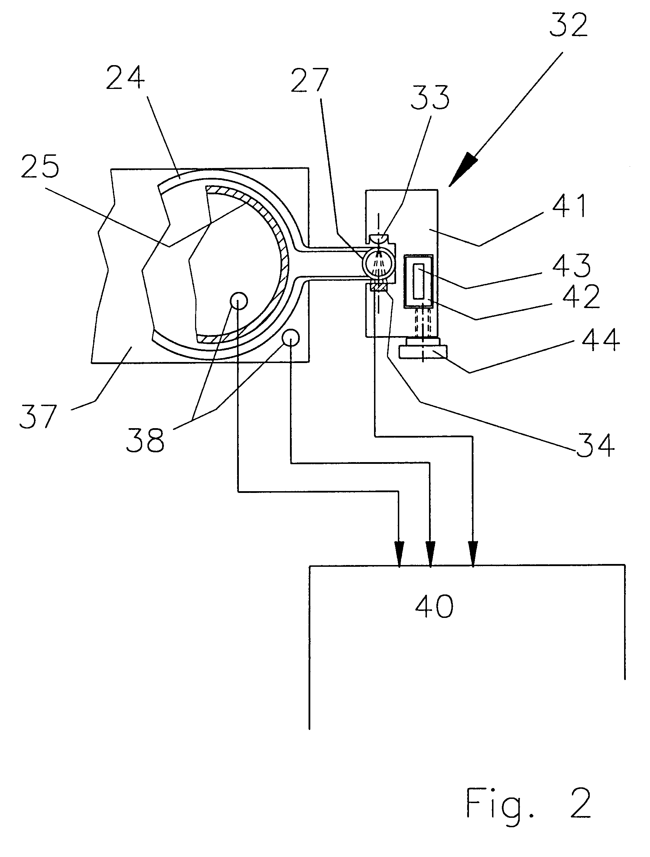

Parallel zum Extraktionsgefäss 24 verläuft eine Steigleitung 27, in der das gleiche Flüssigkeitsniveau herrscht wie im Extraktionsgefäss 24. An der Steigleitung 27 sind feste oder verstellbare Mittel 28 zum Feststellen des Flüssigkeitsniveaus, in der Form einer Lichtschranke angeordnet. Die Lichtschrankenanordnung 32 besteht aus einem Senderelement 33 und einem Empfängerelement 34 (Figur 2) welche einander gegenüberliegend an der Steigleitung 27 angeordnet sind.

Die Lichtschrankenanordnung 32 ist mit einer Haltevorrichtung 41 an einer parallel zur Steigleitung 27 angeordneten Führungsschiene 42 bewegbar befestigt.

Die Führungsschiene 42 ist rechteckig ausgebildet und ist mit einem von unten nach oben verlaufenden Schlitz 43 versehen.

In der Haltevorrichtung 41 ist eine Oeffnung ausgespart, in welche die Führungsschiene 42 eingeführt werden kann. Mittels einer Stellschraube 44 kann die Haltevorrichtung 41 auf einer bestimmten Höhe fixiert werden.

Sobald das Flüssigkeitsniveau 39 in der Steigleitung 27 die Höhe der Lichtschrankenanordnung 32 erreicht hat, vermindert sich die Lichtstärke, die durch das Empfängerelement 34 gemessen wird. Die Lichtschrankenanordnung 32 sendet dadurch ein Signal an eine Steuervorrichtung 40, welche ihrerseits ein Signal zum Oeffnen des Ventils 1 aussendet. Dadurch wird das Extraktionsgefäss 24 geleert, sobald das Lösungsmittelniveau einen vom Benützer bestimmten Sollwert erreicht hat. Auf diese Weise kann auch mit kleinen Lösungsmittelmengen gearbeitet werden, ohne dass ein durch die Hebereinrichtung gegebenes, fix eingestelltes Abzugsniveau erreicht werden muss.

Zum Durchführen von Heiss-Extraktionen verfügt das Extraktionsgefäss 24 in seinem unteren Teil über eine separate Heizeinrichtung 37. Damit kann das zu extrahierende Material auf eine gewünschte Temperatur erhitzt werden, wodurch die Intensität des Extraktionsvorgangs erhöht wird. Ein Temperatursensor 38 bestimmt die Temperatur der separaten Heizeinrichtung 37 im unteren Bereich des Extraktionsgefässes und sendet ein Signal an die Steuervorrichtung 40 aus. Die Steuervorrichtung 40 kann so programmiert werden, dass das Ventil erst geöffnet wird, wenn neben dem Sollwert des Flüssigkeitsniveaus 39 auch eine Solltemperatur der separaten Heizeinrichtung 37 erreicht wird. Ein weiterer Parameter für die Ventilsteuerung ergibt sich, wenn ein Temperatursensor 38 zum Messen der Temperatur der Heizeinrichtung 30 des Destillationsgefässes 22 verwendet wird.

Bei Kaltextraktionen kann die Steuereinrichtung 40 so programmiert werden, dass die durch die Temperatursensoren 38 gemessenen Temperaturen zur Steuerung des Ventils 1 nicht berücksichtigt werden.

Das Extraktionsgefäss 24, die Steigleitung 27 und die Rückflussleitung 26 sind einstückig aus Glas hergestellt. Dabei ist die Steigleitung 27 mit ihrem unteren Ende 35 auf der Oberseite der Rückflussleitung 26 angebracht.

Zum Austrocknen der Extraktor-Anordnung ist ein Inertgasanschluss 36 vorgesehen, der am Destillationsgefäss 22 angeformt ist. Durch den Inertgasanschluss 36 kann die ganze Anordnung mit Gas gefüllt werden, wobei das geschlossene Ventil 1 ein Rückfliessen des Lösungsmittels in das Destillationsgefäss 22 verhindert.

Indem das Extraktionsgefäss 24 an seinem oberen Ende hermetisch verschlossen wird, können auch Extraktionen unter Vakuum oder Teilvakuum durchgeführt werden. Dadurch sind Extraktionen mit niedrigeren Temperaturen möglich.

Figur 2 zeigt eine Draufsicht auf einen Extraktor 21 gemäss Figur 1, bei dem der Glassatz nur angedeutet ist. Am Extraktionsgefäss 24 ist einstückig eine Steigleitung 27 angeformt. Mittels einer Haltevorrichtung 41 ist eine Lichtschrankenanordnung 32 so angeordnet, dass ein Senderelement 33 und ein Empfängerelement 34 einander gegenüberliegen und durch die Steigleitung 27 voneinander getrennt sind. Die Haltevorrichtung 41 ist mit einer Stellschraube 44 an einer parallel zur Steigleitung 27 angeordneten Führungsschiene 42 bewegbar befestigt. Das Destillationsgefäss 22 ist oberhalb einer Heizeinrichtung 30 angeordnet. Eine weitere, separate Heizeinrichtung 37 ist zwischen dem oberen Ende des Destillationsgefässes 22 und dem Extraktionsgefäss 24 angeordnet. Temperatursensoren 38 messen die Temperaturen der beiden Heizeinrichtungen 30 und 37. Die von dem Empfängerelement 34 der Lichtschrankenanordnung 32 und von den Temperatursensoren 38 ausgehenden Signale werden von der Steuervorrichtung 40 zur Steuerung des Ventils 1 ausgewertet.

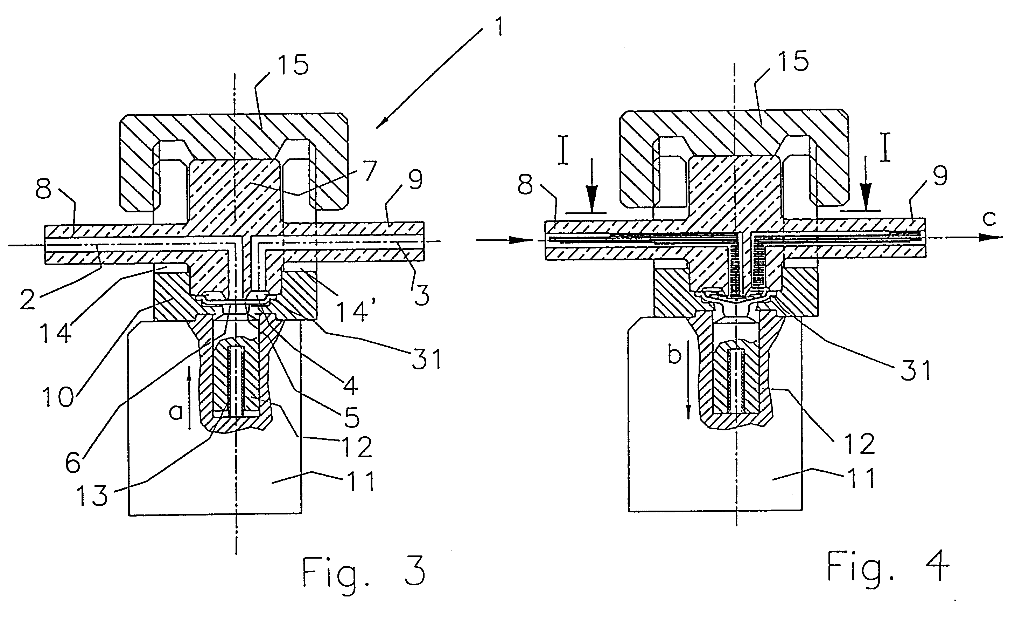

Figur 3 zeigt einen Querschnitt durch ein Hubankermagnetventil 1, welches zum Schliessen und Oeffnen der Rückflussleitung 26 dient. Das Ventil 1 besteht im wesentlichen aus einem homogenen Ventilkörper 7 aus Glas, beispielsweise aus Borsilikatglas. Der Ventilkörper 7 ist etwa zylindrisch und einstückig mit den Stutzen 8 und 9 für die Zuleitung 2 bzw. für die Ableitung 3 ausgebildet.

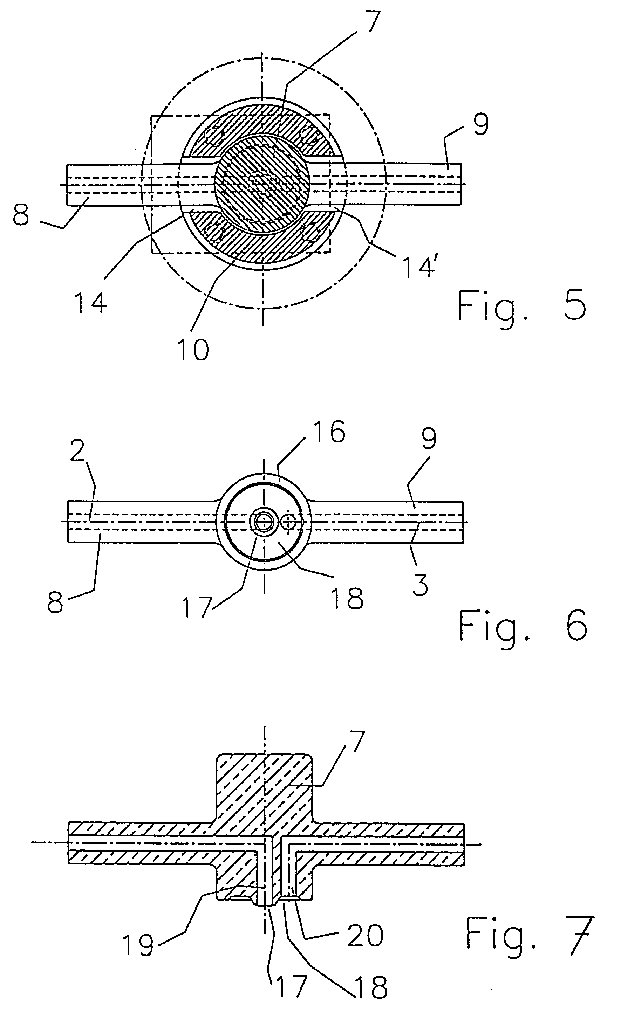

Auf der Stirnseite 16 (Figur 6) ist eine kegelförmige Mündung 17 angeformt, die von einer umlaufenden Nut 18 umgeben ist. Die Mündung 17 bildet gleichzeitig den Ventilsitz 5 (Figur 3) und sie ist das Ende einer zentrischen Bohrung 19 für die Zuleitung. Von der umlaufenden Nut 18 aus erfolgt die Ableitung durch eine Bohrung 20. Der Ventilkörper 17 ist in einem topfförmigen Gehäuse 10 gehalten, das die Schlitze 14, 14' für die Durchführung der Stutzen 8 und 9 aufweist (Figur 5). Im oberen Bereich ist das Gehäuse mit einem Aussengewinde versehen, auf das eine Verschlusskappe 15 mit einem Innengewinde aufgeschraubt werden kann. Die Verschlusskappe 15 presst den Ventilkörper 7 gegen den Boden 31 im Gehäuse 10. Anstelle der Schraubverbindung könnte die Verschlusskappe 15 auch als Bajonettverschluss, Kniehebelverschluss oder dergleichen ausgebildet sein.

Der Ventilkörper 7 und das Gehäuse 20 begrenzen zusammen eine Ventilkammer 4, in welcher eine Membrane 6 aus einem vorzugsweise elastischen Material gehalten ist. Der Randbereich dieser Membrane wird dabei festgeklemmt und dient gleichzeitig als Dichtung gegen aussen.

Am Gehäuse 10 ist eine elektromagnetische Steuervorrichtung 11 angeordnet, die eine Magnetspule trägt. Ein Hubanker 12 ist durch eine Oeffnung im Boden 31 mit der Membrane 6 verbunden und mittels einer Druckfeder 13 in Pfeilrichtung a gegen den Ventilsitz vorgespannt. Bei stromloser Spule wird somit die Membrane gegen den Ventilsitz gepresst und das Ventil ist geschlossen.

Figur 4 zeigt das Ventil in geöffneter Stellung. Die unter Strom gesetzte Spule zieht den Hubanker 12 gegen die Kraft der Druckfeder 13 in Pfeilrichtung b zurück, wobei die Membrane 6 vom Ventilsitz 5 abgehoben wird. Ueber die Ventilkammer 4 wird dabei die Zuleitung 2 mit der Ableitung 3 kurzgeschlossen und es erfolgt eine Strömung in Pfeilrichtung c. Die beiden Stutzen 8 und 9 werden vorzugsweise direkt in die Rückflussleitung 26 eingeschmolzen.

## Patentansprüche

1. Extraktor (21) für die Fest-Flüssig-Extraktion nach Soxhlet mit einem heizbaren Destillationsgefäss (22), einem darüber angeordneten Extraktionsgefäss (24) zur Aufnahme des zu extrahierenden Materials und des Extrakts und mit einem Kühler (23) zur Kondensierung des Extraktionsmittels, wobei zum periodischen Rückführen des Extrakts vom Extraktionsgefäss (24) in das Destillationsgefäss (22) beim Erreichen eines vorbestimmten Niveaus (39) eine Rückflussleitung (26) vorgesehen ist, welche vom Bodenbereich des Extraktionsgefässes (24) ausgeht und in das Destillationsgefäss (22) mündet, dadurch gekennzeichnet, dass die Rückflussleitung (26) vom Extraktionsgefäss (24) bis zum Destillationsgefäss (22) über ihre gesamte Länge mit Gefälle geführt ist und dass sie ein Ventil (1) zum Oeffnen und Schliessen der Rückflussleitung (26) aufweist.

2. Extraktor nach Anspruch 1, dadurch gekennzeichnet, dass das Ventil (1) ein Magnetventil ist.

3. Extraktor nach Anspruch 1 oder 2, bei dem das Extraktionsgefäss (24) und die Rückflussleitung (26) als einstückiger Glassatz ausgebildet ist, dadurch gekennzeichnet, dass das Ventil (1) Anschlussstutzen (8, 9) aufweist, welche direkt in die Rückflussleitung (26) eingeschmolzen sind.

4. Extraktor nach einem der Ansprüche 1 bis 3, dadurch gekennzeichnet, dass das Ventil (1) wenigstens eine Zuleitung (2) und wenigstens eine Ableitung (3) aufweist, die mit einer Ventilkammer (4) in Verbindung stehen, in welcher wenigstens ein Ventilsitz (5) angeordnet ist, dass das Ventil wenigstens ein Schliesselement (6) aufweist, das mit dem Ventilsitz dichtend zusammenwirkt und das von der Aussenseite der Ventilkammer (4) her aktivierbar ist, dass die Ventilkammer (4) teilweise durch einen homogenen Ventilkörper (7) aus Glas begrenzt wird, an dem der Ventilsitz (5) einstückig ausgebildet ist und der je einen Stutzen (8, 9) für die Zuleitung (2) und für die Ableitung (3) aufweist und dass der Ventilkörper (7) lösbar in einem die übrige Ventilkammer umschliessenden Gehäuse (10) gehalten ist.

5. Extraktor nach Anspruch 4, dadurch gekennzeichnet, dass das Schliesselement eine Membrane (6) aufweist, deren Randbereich fest und dichtend zwischen dem Ventilkörper (7) und dem Gehäuse (10) eingespannt ist.

6. Extraktor nach Anspruch 4 oder 5, dadurch gekennzeichnet, dass der Ventilkörper (7) etwa zylindrisch ausgebildet ist und dass das Gehäuse (10) etwa topfförmig ausgebildet ist und seitliche Schlitze (14, 14') aufweist, durch welche die Stutzen (8, 9) aus dem Gehäuse austreten, wobei der Ventilkörper (7) mit einer auf das Gehäuse aufsetzbaren Verschlusskappe (15) fixierbar ist.

7. Extraktor nach Anspruch 5 und 6, dadurch gekennzeichnet, dass der Ventilsitz (5) als kegelförmige Mündung (17) an einer Stirnseite (16) des Ventilkörpers (7) ausgebildet ist.

8. Extraktor nach Anspruch 7, dadurch gekennzeichnet, dass die kegelförmige Mündung (17) von einer umlaufenden Nut (18) umgeben ist, in welche eine Bohrung (20) für die Ableitung (3) mündet.

9. Extraktor nach einem der Ansprüche 1 bis 8, dadurch gekennzeichnet, dass am Extraktionsgefäss (24) Mittel (28) zum Feststellen des Flüssigkeitsniveaus (39) angeordnet sind und dass das Ventil (1) bei einem vorbestimmten Niveau über diese Mittel ansteuerbar ist.

10. Extraktor nach Anspruch 9, dadurch gekennzeichnet, dass ausserhalb des Extraktionsgefässes (24) eine mit diesem kommunizierende Steigleitung (27) angeordnet ist und dass die Mittel (28) an der Steigleitung angeordnet sind.

11. Extraktor nach Anspruch 10, dadurch gekennzeichnet, dass die Mittel (28) eine Lichtschrankenanordnung (32) mit einem Senderelement (33) und mit einem Empfängerelement (34) aufweisen, welche derart an der Steigleitung (27) angeordnet sind, dass der Lichtstrahl die Steigleitung (27) durchdringt.

12. Extraktor nach Anspruch 11, dadurch gekennzeichnet, dass die Lichtschrankenanordnung (32) höhenverstellbar an der Steigleitung (27) angeordnet ist.

13. Extraktor nach einem der Ansprüche 10 bis 12, dadurch gekennzeichnet, dass die Steigleitung (27) an ihrem unteren Ende (35) direkt und oberhalb des Ventils (1) in die Rückflussleitung (26) mündet.

14. Extraktor nach einem der Ansprüche 1 bis 13, dadurch gekennzeichnet, dass das Destillationsgefäss (22) einen Inertgasanschluss (36) aufweist.

15. Extraktor nach einem der Ansprüche 1 bis 14, dadurch gekennzeichnet, dass das Extraktionsgefäss (24) eine separate Heizeinrichtung (37) aufweist.

16. Extraktor nach einem der Ansprüche 1 bis 15, dadurch gekennzeichnet, dass am Extraktionsgefäss (24) und oder am Destillationsgefäss (22) ein Temperatursensor (38) angeordnet ist und dass das Ventil (1) über die ermittelte Temperatur ansteuerbar ist.

## Claims

1. An extractor (21) for Soxhlet solid-liquid extraction comprising a heatable distillation vessel (22), an extraction vessel (24) arranged thereabove for receiving the material to be extracted and the extract and a cooler (23) for condensing the extraction agent, wherein for periodic return of the extract from the extraction vessel (24) into the distillation vessel (22) when a predetermined level (39) is reached there is provided a reflux conduit (26) which starts from the bottom region of the extraction vessel (24) and opens into the distillation vessel (22), characterised in that the reflux conduit (26) is guided with a fall over its entire length from the extraction vessel (24) to the distillation vessel (22) and that it has a valve (1) for opening and closing the reflux conduit (26).

2. An extractor according to claim 1 characterised in that the valve (1) is a solenoid valve.

3. An extractor according to claim 1 or claim 2 in which the extraction vessel (24) and the reflux conduit (26) is in the form of a one-piece glass array characterised in that the valve (1) has connecting portions (8, 9) which are fused directly into the reflux conduit (26).

4. An extractor according to one of claims 1 to 3 characterised in that the valve (1) has at least one feed conduit (2) and at least one discharge conduit (3) which communicate with a valve chamber (4) in which at least one valve seat (5) is arranged, that the valve has at least one closing element (6) which sealingly co-operates with the valve seat and which can be activated from the outside of the valve chamber (4), that the valve chamber (4) is partially delimited by a homogeneous valve body (7) of glass, on which the valve seat (5) is integrally formed and which has a respective connecting portion (8, 9) for the feed conduit (2) and for the discharge conduit (3), and that the valve body (7) is releasably held in a housing (10) surrounding the rest of the valve chamber.

5. An extractor according to claim 4 characterised in that the closing element has a diaphragm (6) whose edge region is fixedly and sealingly clamped between the valve body (7) and the housing (10).

6. An extractor according to claim 4 or claim 5 characterised in that the valve body (7) is of a substantially cylindrical configuration and that the housing (10) is of a substantially pot-shaped configuration and has lateral slots (14, 14') through which the connecting portions (8, 9) extend from the housing, wherein the valve body (7) can be fixed with a closure cap (15) which can be fitted on to the housing.

7. An extractor according to claim 5 and claim 6 characterised in that the valve seat (5) is in the form of a tapering mouth portion (17) at an end face (16) of the valve body (7).

8. An extractor according to claim 7 characterised in that the tapering mouth portion (17) is surrounded by a groove (18) which extends therearound and into which a bore (20) for the discharge conduit (3) opens.

9. An extractor according to one of claims 1 to 8 characterised in that arranged on the extraction vessel (24) are means (28) for detecting the liquid level (39) and that the valve (1) is actuatable by way of said means at a predetermined level.

10. An extractor according to claim. 9 characterised in that arranged outside the extraction vessel (24) is a rising conduit (27) communicating therewith and that the means (28) are arranged at the rising conduit.

11. An extractor according to claim 10 characterised in that the means (28) have a light barrier arrangement (32) having a transmitter element (33) and a receiver element (34) which are arranged at the rising conduit (27) in such a way that the light beam passes through the rising conduit (27).

12. An extractor according to claim 11 characterised in that the light barrier arrangement (32) is arranged adjustably in respect of height at the rising conduit (27).

13. An extractor according to one of claims 10 to 12 characterised in that at its lower end (35) the rising conduit (27) opens into the reflux conduit (26) directly and above the valve (1).

14. An extractor according to one of claims 1 to 13 characterised in that the distillation vessel (22) has an inert gas connection (36).

15. An extractor according to one of claims 1 to 14 characterised in that the extraction vessel (24) has a separate heating device (37).

16. An extractor according to one of claims 1 to 15 characterised in that a temperature sensor (38) is arranged at the extraction vessel (24) and/or at the distillation vessel (22) and that the valve (1) is actuatable by way of the ascertained temperature.

## Revendications

1. Extracteur (21) pour l'extraction solide-liquide du type Soxhlet, comprenant un récipient de distillation (22) apte à être chauffé, un récipient d'extraction (24) disposé au-dessus de celui-ci pour recevoir le matériau à soumettre à l'extraction et l'extrait, et un réfrigérant (23) pour condenser l'agent d'extraction, étant précisé que pour ramener périodiquement l'extrait du récipient d'extraction (24) dans le récipient de distillation (22) lorsqu'un niveau (39) prédéfini est atteint, on prévoit une conduite de recyclage (26) qui part de la zone du fond du récipient d'extraction (24) et qui débouche dans le récipient de distillation (22), caractérisé en ce que la conduite de recyclage (26) présente une inclinaison sur toute sa longueur, du récipient d'extraction (24) au récipient de distillation (22), et en ce que la conduite de recyclage comporte, pour l'ouvrir et la fermer, une soupape (1).

2. Extracteur selon la revendication 1, caractérisé en ce que la soupape (1) est une électrovanne.

3. Extracteur selon la revendication 1 ou 2, dans lequel le récipient d'extraction (24) et la conduite de recyclage (26) sont conçus comme un ensemble en verre d'une seule pièce, caractérisé en ce que la soupape (1) comporte des tubulures de raccordement (8, 9) qui sont incorporées directement dans la conduite de recyclage (26).

4. Extracteur selon l'une des revendications 1 à 3, caractérisé en ce que la soupape (1) comporte au moins une conduite d'amenée (2) et au moins une conduite d'évacuation (3) qui communiquent avec une chambre de soupape (4) dans laquelle est disposé au moins un siège de soupape (5), en ce que la soupape comporte au moins un élément de fermeture (6) qui coopère de manière étanche avec le siège de soupape et qui est apte à être activé à partir du côté extérieur de la chambre de soupape (4), en ce que la chambre de soupape (4) est limitée partiellement par un corps de soupape homogène (7) en verre sur lequel le siège de soupape (5) est formé d'une seule pièce et qui comporte des tubulures respectives (8, 9) pour la conduite d'amenée (2) et la conduite d'évacuation (3), et en ce que le corps de soupape (7) est retenu de façon amovible dans une enveloppe (10) qui entoure le reste de la chambre de soupape.

5. Extracteur selon la revendication 4, caractérisé en ce que l'élément de fermeture comporte une membrane (6) dont la zone du bord est serrée fermement et de façon étanche entre le corps de soupape (7) et l'enveloppe (10).

6. Extracteur selon la revendication 4 ou 5, caractérisé en ce que le corps de soupape (7) est à peu près cylindrique et en ce que l'enveloppe (10) a à peu près la forme d'un pot et présente des fentes latérales (14, 14') par lesquelles les tubulures (8, 9) sortent de l'enveloppe, le corps de soupape (7) pouvant être fixé à l'aide d'un couvercle (15) apte à être posé sur l'enveloppe.

7. Extracteur selon les revendications 5 et 6, caractérisé en ce que le siège de soupape (5) est conçu comme une ouverture conique (17) sur un côté frontal (16) du corps de soupape (7).

8. Extracteur selon la revendication 7, caractérisé en ce que l'ouverture conique (17) est entourée par une rainure circulaire (18) dans laquelle débouche un perçage (20) prévu pour la conduite d'évacuation (3).

9. Extracteur selon l'une des revendications 1 à 8, caractérisé en ce que des moyens (28) pour déterminer le niveau de liquide (39) sont disposés sur le récipient d'extraction (24), et en ce que la soupape (1) est apte à être commandée par l'intermédiaire de ces moyens en présence d'un niveau prédéfini.

10. Extracteur selon la revendication 9, caractérisé en ce qu'il est prévu, a l'extérieur du récipient d'extraction (24), une conduite montante (27) qui communique avec celui-ci, et en ce que les moyens (28) sont disposés sur la conduite montante.

11. Extracteur selon la revendication 10, caractérisé en ce que les moyens (28) comportent un dispositif de cellule photo-électrique (32) formé d'un élément émetteur (33) et d'un élément récepteur (34) qui sont disposés sur la conduite montante (27) de telle sorte que le rayon lumineux traverse la conduite montante (27).

12. Extracteur selon la revendication 11, caractérisé en ce que le dispositif de cellule photo-électrique (32) est disposé, réglable en hauteur, sur la conduite montante (27).

13. Extracteur selon l'une des revendications 10 à 12, caractérisé en ce que la conduite montante (27), au niveau de son extrémité inférieure (35), débouche directement, au-dessus de la soupape (1), dans la conduite de recyclage (26).

14. Extracteur selon l'une des revendications 1 à 13, caractérisé en ce que le récipient de distillation (22) comporte un raccordement de gaz inerte (36).

15. Extracteur selon l'une des revendications 1 à 14, caractérisé en ce que le récipient d'extraction (24) comporte un dispositif de chauffage séparé (37).

16. Extracteur selon l'une des revendications 1 à 15, caractérisé en ce qu'un capteur de température (38) est disposé sur le récipient d'extraction (24) et/ou sur le récipient de distillation (22), et en ce que la soupape (1) est apte à être commandée par l'intermédiaire de la température détectée.
